# EUROPÄISCHE PATENTSCHRIFT

(11) **EP 4 377 043 B1**
(45) Veröffentlichungstag und Bekanntmachung des Hinweises auf die Patenterteilung: **02.09.2026**
(21) Anmeldenummer: 22757510.7
(22) Anmeldetag: 22.07.2022
(51) Int. Cl.: B23K 26/064, B23K 26/14, B23K 26/38, B23K 37/04, G02B 7/02

(54) **HALTEANORDNUNG FÜR EIN OPTISCHES ELEMENT EINER LASERBEARBEITUNGSANLAGE**
HOLDING ARRANGEMENT FOR AN OPTICAL ELEMENT OF A LASER PROCESSING SYSTEM
DISPOSITIF DE RETENUE POUR UN ÉLÉMENT OPTIQUE D'UNE INSTALLATION D'USINAGE AU LASER

(30) Priorität: 28.07.2021 DE 202021104035 U
(43) Veröffentlichungstag der Anmeldung: 05.06.2024
(73) Patentinhaber: TRUMPF Werkzeugmaschinen SE + Co. KG, 71254 Ditzingen (DE)
(72) Erfinder: LEINBERGER, Stefan Markus, 73037 Göppingen (DE); SCHOLZ, Karsten, 71229 Stuttgart (DE); HUBER, Alexander, 75181 Pforzheim (DE)
(74) Vertreter: Trumpf Patentabteilung
(86) Internationale Anmeldenummer: PCT/EP2022/070627
(87) Internationale Veröffentlichungsnummer: WO 2023/006608

(56) Entgegenhaltungen:
- EP-A1- 3 435 131
- DE-U1- 202016 005 318
- JP-A- 2017 161 650
- JP-U- H 064 718
- JP-U- S5 579 304
- US-A1- 2002 018 202

## Beschreibung

### Gebiet der Erfindung

Die Erfindung betrifft das Gebiet der Laserbearbeitungsanlagen. Insbesondere betrifft die Erfindung eine Halteanordnung für ein optisches Element eines Laserschneidkopfs.

### Stand der Technik

Optische Elemente in Schneidoptiken haben eine hohe Anforderung an Positionsgenauigkeit, Sauberkeit, sowie mechanische und thermische Belastung. Häufig sind dies die Ursachen für Ausfälle des optischen Elements: Verschmutzungen des optischen Elements führen zu erhöhter Absorption der Laserstrahlung und damit zu einer Temperaturerhöhung der Optik sowie zu thermisch induzierten Spannungen. Das optische Element, das in der Regel aus Glas oder einem vergleichbaren Material besteht, dehnt sich bei Erwärmung weniger aus als die metallischen Fassungselemente, durch die es im Strahlengang fixiert wird. Das kann dazu führen, dass sich die Einspannung des optischen Elements in der Fassung löst. Ruckartige Bewegungen des Laserbearbeitungskopfs können bei nicht ausreichend fest gehaltenem optischen Element zu einer Verschiebung des Elements relativ zum Laserstrahl führen, wobei das optische Element beschädigt werden kann und ausgetauscht werden muss.

Eine übliche Fassung eines optischen Elements weist einen metallischen Schraubring auf, der das optische Element in einer Halterung sichert. Zusätzlich kann ein Federelement (z.B. eine Wellfederscheibe) zum Ausgleich von Spannungen vorgesehen sein.

Bei solchen Fassungen kann jedoch das Problem auftreten, dass beim Einschrauben des Schraubrings in die Halterung Partikel entstehen und/oder aus den Schraubwindungen ausgetragen werden und auf das optische Element gelangen. Auch bei ruckartigen Bewegungen des Laserbearbeitungskopfs können sich durch Reibung der metallischen Fassungskomponenten an dem optischen Element Partikel lösen und auf der Oberfläche des optischen Elements verteilen. Durch den Laserstrahl können diese Partikel auf dem optischen Element einbrennen, führen zu erhöhter Strahlungsabsorption und damit zu verstärkter Wärmeausdehnung in der Halteanordnung aus optischem Element und Fassung. Je höher die Laserleistung ist, desto eher kommt es zu einer Beschädigung des optischen Elements.

In der DE102017209696A1 wird eine Fassung für ein Schutzglas beschrieben, die durch ein Kunststoff-Spritzgussteil gebildet ist. Auch in der DE102013206394A1 und der DE202016005318U1 werden Halteanordnungen für optische Elemente mittels Kunststofffassungen beschrieben. Die aus diesen Druckschriften bekannten Fassungen eignen sich jedoch nicht für eine sichere Fixierung eines optischen Elements in einem Hochleistungslaser mit bis zu 24 KW oder mehr Laserleistung.

In der JPS5579304U, der JPH064718U, der JP2017161650A oder der US20020018202A1 werden Halteanordnungen für optische Elemente beschrieben, die Federelemente aus Metall oder Kunststoff aufweisen, um eine Haltekraft bzw. Vorspannung auf das optische Element auszuüben. Eine Wärmeausdehnung der Komponenten dieser Halteanordnungen kann sich negativ auf die Haltekraft auswirken.

Der vorliegenden Erfindung liegt die Aufgabe zugrunde, eine Halteanordnung für ein optisches Element eines Laserschneidkopfs bereitzustellen, durch die die oben genannten Probleme vermindert oder vermieden werden. Insbesondere soll eine sichere und einfach zu handhabende Fixierung des optischen Elements ermöglicht werden. Die Halteanordnung soll ferner dazu geeignet sein Spannungsschwankungen auszugleichen.

### Die Erfindung

Zur Lösung der der Erfindung zugrundeliegenden Aufgabe wird eine Halteanordnung für ein optisches Element eines Laserschneidkopfs bereitgestellt. Die Halteanordnung umfasst ein Aufnahmeelement mit einer Strahldurchtrittsöffnung für einen Laserstrahl. Das Aufnahmeelement kann insbesondere eine im Wesentlichen hohlzylinderförmige Form aufweisen und in dem Gehäuse eines Laserschneidkopfs positionierbar sein.

Die Halteanordnung umfasst ferner ein, im Wesentlichen zylinderförmiges, optisches Element, das an dem Aufnahmeelement positionierbar ist, sodass es die Strahldurchtrittsöffnung abdeckt, wobei das optische Element eine von dem Aufnahmeelement entfernte (bzw. abgewandte) erste umlaufende Außenkante mit einer Fase aufweist. Die Formulierung "im Wesentlichen zylinderförmig" ist so zu verstehen, dass das optische Element eine erste Grundfläche und eine zweite, der ersten Grundfläche gegenüberliegende Grundfläche aufweist, wobei die Grundflächen durch eine umlaufende Außenfläche miteinander verbunden sind. An dem Übergang zwischen der Außenfläche und den Grundflächen ist jeweils eine umlaufende Außenkante ausgebildet, wobei eine der Außenkanten (erste Außenkante) durch die Fase verschnitten ist. Die Fase erstreckt sich vorzugsweise über die gesamte Länge der ersten Außenkante (umlaufende Fase). Auch an der zweiten, dem Aufnahmeelement nahen (bzw. zugewandten) Außenkante des optischen Elements, kann eine Fase ausgebildet sein. Die Fase der zweiten Außenkante kann kleiner ausgebildet sein als die Fase der ersten Außenkante. Die beiden Grundflächen können vorzugsweise ebene Flächen sein, die parallel zueinander angeordnet sind, wobei sich die Außenfläche vorzugsweise senkrecht zu den Grundflächen erstreckt. Ferner können die Grundflächen bevorzugt jeweils eine kreisförmige Außenkontur aufweisen. Es sind jedoch auch andere Konturen möglich, wie etwa eine polygonale Kontur oder eine teilweise abgeflachte Kontur.

Die Halteanordnung umfasst ferner ein, im Wesentlichen ringförmiges, Federelement aus Kunststoff, das an einem von dem Aufnahmeelement entfernten ersten Ende einen Halteabschnitt mit einer radial nach innen geneigten Haltefläche und an einem dem Aufnahmeelement nahen zweiten Ende einen Spannabschnitt mit einer radial nach außen geneigten Spannfläche aufweist. Das Federelement ist derart an dem optischen Element positionierbar, dass es mit der Haltefläche an der Fase des optischen Elements anliegt. Vorzugsweise kann zwischen der Haltefläche des Federelements und der Fase an der ersten Außenkante des optischen Elements ein jeweils im Wesentlichen ringförmiger Flächenkontakt oder Linienkontakt bestehen.

Die Formulierung "im Wesentlichen ringförmig" ist so zu verstehen, dass das Federelement nicht zwangsläufig eine Kreisringform aufweist, auch wenn dies bevorzugt ist. Es ist vorgesehen, dass die Form des Federelements auf die Form des optischen Elements abgestimmt ist.

Das Federelement weist im Querschnitt einen senkrecht verlaufenden zentralen Abschnitt auf, der den Halteabschnitt und den Spannabschnitt miteinander verbindet. Im Bereich des zentralen Abschnitts kann das Federelement vorzugsweise einen konstanten Innendurchmesser DF_{zi} und einen konstanten Außendurchmesser DF_{za} aufweisen. Seinen kleinsten Durchmesser DFₘᵢₙ kann das Federelement am Ende (z.B. oberen Ende) des Halteabschnitts aufweisen und seinen größten Durchmesser DFₘₐₓ am gegenüberliegenden Ende (z.B. unteren Ende) des Spannabschnitts. Der Innendurchmesser DF_{zi} im zentralen Abschnitt des Federelements kann vorzugsweise größer sein als ein Durchmesser D_{OE} des optischen Elements, wobei der kleinste Durchmesser DFₘᵢₙ kleiner ist als der Durchmesser D_{OE} des optischen Elements. Mit einer solchen Ausgestaltung kann das Federelement erfindungsgemäß an dem optischen Element positioniert werden.

Die Halteanordnung umfasst ferner ein, im Wesentlichen ringförmiges, Spannelement, das derart an dem Federelement positionierbar und an dem Aufnahmeelement befestigbar ist, dass das Spannelement in den Spannabschnitt des Federelements eingreift und das optische Element mittels des Halteabschnitts des Federelements gegen das Aufnahmeelement gedrückt wird. Es versteht sich, dass auch das Spannelement vorzugsweise kreisringförmig ausgebildet sein kann und, dass die genaue Form jedoch an die Ausgestaltung des optischen Elements und/oder des Federelements angepasst sein kann. Das Spannelement weist einen Innendurchmesser DSᵢ auf, der vorzugsweise größer ist als der Außendurchmesser DF_{za} im zentralen Bereich des Federelements, jedoch kleiner als der größte Durchmesser DFₘₐₓ des Federelements am Ende des Spannabschnitts. Bei dieser Ausgestaltung kann das Spannelement erfindungsgemäß in den Spannabschnitt des Federelements eingreifen und dieses in Richtung des Aufnahmeelements drücken. In einem zusammengesetzten Zustand der Halteanordnung steht der zentrale Abschnitt des Federelements vorzugsweise weder mit dem optischen Element noch mit dem Spannelement in Berührung. Das Spannelement weist an seinem dem Aufnahmeelement nahen Ende radial innen eine Fase oder einen Radius auf, die bzw. der an eine Neigung der Spannfläche des Federelements angepasst ist, um dieses besser zu erfassen. Der Spannabschnitt kann keilförmig ausgebildet sein, sodass der Innendurchmesser DF_{zi} sich bis zum Ende des Spannabschnitts des Federelements erstreckt. Durch eine keilförmige Ausgestaltung des Spannabschnitts kann die Stabilität in diesem Bereich gegenüber einer flachen Ausbildung des Spannabschnitts erhöht und damit die Kraftübertragung in den zentralen Abschnitt des Spannelements verbessert werden.

Das optische Element, das Federelement und das Spannelement können in dieser Reihenfolge übereinander auf dem Aufnahmeelement angeordnet sein. Eine Anordnung der Komponenten in der gleichen Reihenfolge untereinander unter dem Aufnahmeelement ist jedoch ebenso möglich. Angaben wie "oben", "unten", "übereinander", "untereinander", "auf", "unter", "vertikal", "horizontal" beziehen sich im Rahmen dieser Offenbarung auf die Lage der entsprechenden Komponenten in einem in einen Laserschneidkopf eingebauten Zustand der Halteanordnung, wobei der Laserstrahl von oben nach unten durch den Laserschneidkopf geleitet wird.

Das Aufnahmeelement und das Spannelement können jeweils aus einem metallischen Material, insbesondere aus Stahl, gefertigt sein. Das Spannelement kann vorzugsweise ein Außengewinde aufweisen, das mit einem Innengewinde des Aufnahmeelements korrespondiert, um eine Schraubverbindung zwischen dem Spannelement und dem Aufnahmeelement herzustellen. Ferner kann das Spannelement eine Schulter aufweisen, die radial über eine Ablagefläche des Aufnahmeelements ragt und eine Endposition beim Schrauben des Spannelements auf das Aufnahmeelement definiert. Diese Bauweise ermöglicht eine einfache Montage, da keine komplizierte Einstellung einer Vorspannkraft des Spannelements, z.B. durch Aufbringen eines bestimmten Drehmoments erforderlich ist. Die Dicke (Höhe) des optischen Elements und die Höhe des Federelements sind so aufeinander abgestimmt, dass, wenn sich das Spannelement in der Endposition befindet, sich das Federelement in einem Spalt zwischen dem optischen Element und dem Spannelement elastisch verformt und das optische Element mit einer genau vorbestimmbaren Kraft nach unten gegen das Aufnahmeelement gedrückt wird.

Gemäß einer bevorzugten Variante kann das Federelement aus einem hochtemperaturbeständigen thermoplastischen Kunststoff, insbesondere aus Polyetheretherketon (PEEK), hergestellt sein. Aufgrund seiner guten Temperaturbeständigkeit und seiner guten mechanischen Eigenschaften, insbesondere seiner guten Kriechfestigkeit, eignet sich dieser Werkstoff besonders gut für das Federelement. Werkstoffe, die ebenfalls für das Federelement geeignet sein können, sind beispielsweise andere Polyetherketone (PEK) oder Polyphenylsulfid (PPS). Beim Schrauben des Spannelements auf das Aufnahmeelement wird das Federelement, das mit seinem Halteabschnitt an der Fase des optischen Elements anliegt, elastisch verformt. Die dabei entstehende Vorspannkraft im Federelement wird auf das optische Element übertragen und drückt dieses gegen das Aufnahmeelement. Die Vorspannkraft des Federelements kann vorzugsweise so eingestellt sein, dass Verformungen einzelner Elemente, insbesondere des Aufnahmeelements und/oder des Spannelements, aufgrund mechanischer und/oder thermischer Einflüsse ausgeglichen werden und das optische Element in jedem Fall sicher in seiner Position gehalten wird. Ein weiterer Vorteil eines Federelements aus einem Hochleistungskunststoff wie PEEK besteht darin, dass bei Relativbewegungen zwischen dem Federelement und dem optischen Element keine Partikel entstehen, die die Oberfläche des optischen Elements verunreinigen. Bei Reibung kann dagegen ein Schmierfilm entstehen, der keinen negativen Einfluss auf den Betrieb des Laserschneidkopfes hat.

Die Fase an der ersten Außenkante des optischen Elements kann vorzugsweise einen vorgebbaren Fasenwinkel aufweisen, wobei die Spannfläche des Federelements einen Neigungswinkel aufweist, der dem Fasenwinkel des optischen Elements im Wesentlichen entspricht. Es versteht sich, dass aufgrund der elastischen Verformbarkeit des Federelements kleine Abweichungen von beispielsweise bis zu 2° zwischen dem Neigungswinkel der Spannfläche und dem Fasenwinkel keinen wesentlichen Einfluss auf die Funktion der Halteanordnung haben. Es kann vorteilhaft sein, wenn der Neigungswinkel der Spannfläche des Federelements (gegenüber der Vertikalen), größer ist als der Fasenwinkel des optischen Elements. Das heißt, dass im entspannten Zustand des Federelements ein linienförmiger Kontakt am Ende des Halteabschnitts mit der Fase des optischen Elements besteht. Erst beim Spannen des Federelements durch das Spannelement wird durch die Verformung des Federelements die Haltefläche gegen die Fase gedrückt, sodass ein umlaufender Flächenkontakt entsteht.

Der Fasenwinkel kann zwischen 20° und 70°, vorzugsweise etwa 45°, betragen. Ein Fasenwinkel von 45° (+/- 2°) ist dahingehend vorteilhaft, dass eine günstige Verteilung der Spannkraft in vertikaler und in radialer Richtung auf das optische Element erreicht werden kann.

Wie bereits weiter oben erwähnt weist das Spannelement an seinem dem Aufnahmeelement nahen Ende an seinem Innenumfang eine Fase oder einen Radius auf, die bzw. der zum Eingriff mit der radial nach außen geneigten Spannfläche des Federelements ausgebildet ist. Diese Fase kann einen Winkel aufweisen, der im Wesentlichen einem Neigungswinkel der Spannfläche entspricht. Analog zum Neigungswinkel der Haltefläche, kann der Neigungswinkel der Spannfläche zwischen 20° und 70°, vorzugsweise etwa 45°, betragen.

Gemäß einer Variante weist das Aufnahmeelement drei Erhebungen auf, die in gleichmäßigen Abständen zueinander auf einer Kreisbahn radial außerhalb der Strahldurchtrittsöffnung angeordnet sind und die eine Dreipunktauflage für das optische Element bilden. Durch eine Dreipunktauflage kann die Positionierung des optischen Elements sehr genau eingestellt werden und es kann einer ungünstigen Verformung des optischen Elements durch einen starken Klemmdruck vorgebeugt werden.

Das Aufnahmeelement kann eine ringförmige Nut aufweisen, die sich radial außerhalb der Strahldurchtrittsöffnung erstreckt. Bei dieser Ausgestaltung kann die Halteanordnung ferner einen Dichtungsring umfassen, der in die ringförmige Nut aufnehmbar ist, um gemeinsam mit dem optischen Element die Strahldurchtrittsöffnung abzudichten. Bei einer bevorzugten Ausführungsform mit den Erhebungen für die Dreipunktauflage und der ringförmigen Nut, kann die Nut vorzugsweise radial innerhalb der Erhebungen angeordnet sein. Ferner kann der Dichtungsring im entspannten Zustand einen kreisförmigen Querschnitt mit einem Durchmesser aufweisen, der größer ist als eine Summe aus der Tiefe der Nut und der Höhe der Erhebungen, sodass er die Erhebungen im entspannten Zustand überragt. Der Dichtungsring dient einer Abdichtung der Strahldurchtrittsöffnung gegen Partikel, die in Betrieb des Schneidkopfes durch einen unterhalb des optischen Elements herrschenden Schneidgasdruck in die vorgelagerte Schneidoptik des Schneidkopfes oberhalb des optischen Elements geraten können.

Der Dichtungsring kann vorzugsweise besonders weich ausgebildet sein. Er kann aus einem Kunststoff besteht und eine Shore-Härte (SHORE A) zwischen 25 und 45, vorzugsweise von 40, aufweisen. Aufgrund seiner geringen Härte übt der Dichtungsring vorteilhafter Weise nur eine sehr geringe Kraft auf das optische Element aus, erfüllt jedoch gleichzeitig seine Dichtungsfunktion. Durch den geringen Gegendruck des Dichtungsrings kann die erforderliche Vorspannkraft des Federelements reduziert werden.

Die in der erfindungsgemäßen Halteanordnung als optisches Element angeordnete Planplatte kann einen im Wesentlichen zylinderförmigen Grundkörper aus Quarzglas mit einer Dicke (Höhe) zwischen 5 mm und 10 mm, vorzugsweise von etwa 7 mm, umfassen. An einer ersten umlaufenden Außenkante des Grundkörpers ist eine Fase mit einem Fasenwinkel zwischen 20° und 70°, vorzugsweise von etwa 45°, ausgebildet. Die Fase erstreckt sich über eine Höhe zwischen 1 mm und 3 mm, vorzugsweise von etwa 1,8 mm. Die Planplatte weist für Laserstrahlung mit einer Wellenlänge zwischen 1030 nm und 1080 nm und bei einem Einfallswinkel (der Laserstrahlung) von 15° (gegenüber dem senkrechten Einfall) einen Reflexionsgrad zwischen 0,03 % und 0,3 %, bevorzugt zwischen 0,03 % und 0,09 % auf. Alternativ weist die Planplatte für den gleichen Wellenlängenbereich (1030 nm bis 1080 nm) und bei einem Einfallswinkel von 0° einen Reflexionsgrad von weniger als 0,3 %, bevorzugt weniger als 0,1 %, noch bevorzugter von weniger als 0,05 % auf.

Die Planplatte kann beispielsweise als Schutzglas in einem Laserschneidkopf eingesetzt werden. Bei einer winkligen Anordnung in einem Laserschneidkopf kann die Planplatte ferner als Strahlteiler verwendet werden, wobei reflektierte Strahlung gezielt zu einem Analysemodul zur Überwachung des Strahlprofils des Schneidstrahls geleitet wird. Bei senkrechtem Einfall des Laserstrahls kann der Reflexionsgrad vorzugsweise so niedrig wie möglich gewählt werden, um Reflexionen soweit es geht zu vermeiden. Bei einer winkligen Anordnung der Planplatte mit der zusätzlichen Funktion als Strahlteiler, soll ebenfalls ein möglichst geringer Reflexionsgrad erreicht werden, wobei jedoch ein minimaler Reflexionsgrad von 0,03 % nicht unterschritten werden darf, um die Überwachung des Strahlprofils durchführen zu können. Um einen entsprechenden Reflexionsgrad der Planplatte zu erreichen, kann die Planplatte an ihrer oberen Grundfläche, in die der Laserstrahl einfällt, eine reflexionsreduzierende Beschichtung aufweisen.

Zur Lösung der der Erfindung zugrundeliegenden Aufgabe wird ferner ein Laserschneidkopf bereitgestellt, der wenigstens eine Halteanordnung gemäß einer der oben beschriebenen Varianten umfasst.

Der Laserschneidkopf kann einen verkippbaren Abschnitt aufweisen, der dazu ausgebildet ist, bei einer Kollision des Laserschneidkopfes mit einem zu bearbeitenden Werkstück, seitlich zu verkippen, wobei die Halteanordnung in dem verkippbaren Abschnitt angeordnet ist. Da die erfindungsgemäße Halteanordnung eine sichere Fixierung eines darin gehaltenen optischen Elements gewährleistet, sind hohe Beschleunigungen, die in dem verkippbaren Teil des Laserschneidkopfes bei einer Kollision mit dem Werkstück auftreten, unkritisch für die Positionsgenauigkeit des optischen Elements. Reibungen zwischen optischem Element und Federelement führen ferner nicht zu einer Partikel-Verschmutzung des Optischen Elements.

Die erfindungsgemäße Halteanordnung kann in Laserschneidanlagen eingesetzt werden, die mit einer Laserleistung von bis zu 24 KW oder höher betrieben werden. Es versteht sich, dass eine erfindungsgemäße Halteanordnung auch in anderen Laserbearbeitungsanlagen, beispielsweise zum Schweißen, Markieren usw., eingesetzt werden kann.

### Ausführungsbeispiele

Die nachfolgende Beschreibung bevorzugter Ausführungsbeispiele dient im Zusammenhang mit den Zeichnungen der näheren Erläuterung der Erfindung.

Es zeigen:
- Fig. 1: eine Laserschneidanlage in einer perspektivischen Gesamtansicht;
- Fig. 2: eine schematische Darstellung einer Laserschneidvorrichtung in Form eines Laserschneidkopfs einer Anlage gemäß Figur 1;
- Fig. 3a: eine Halteanordnung gemäß der vorliegenden Erfindung mit einer Planscheibe als optischem Element im Querschnitt;
- Fig. 3b: Teile der Halteanordnung gemäß Figur 3a in der Draufsicht;
- Fig. 4a: Ein Ausschnitt eines Laserschneidkopfes mit einer Halteanordnung für ein optisches Element gemäß dem Stand der Technik; und
- Fig. 4b: Ein Ausschnitt eines Laserschneidkopfes mit einer Halteanordnung für ein optisches Element gemäß der vorliegenden Erfindung.

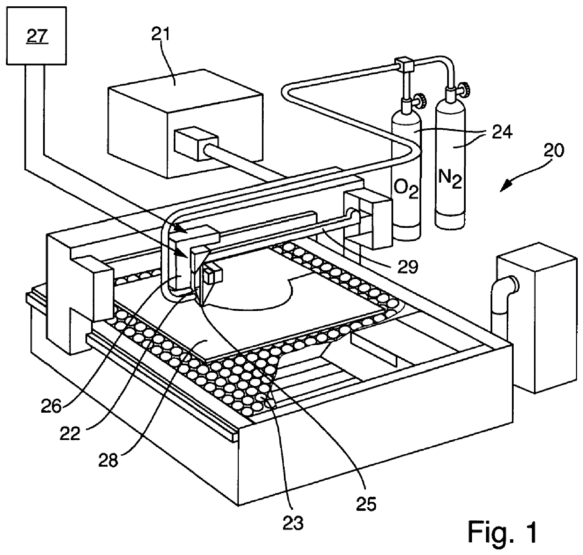

Figur 1 zeigt eine Laserschneidanlage 20, in der eine oder mehrere erfindungsgemäße Halteanordnungen für verschiedene optische Elemente eingesetzt werden können.

Die Laserschneidanlage 20 weist einen Laserstrahlerzeuger 21 auf (z.B. für einen CO₂ Laser oder einen Festkörperlaser). Sie weist einen verfahrbaren Laserschneidkopf 22 und eine Werkstückauflage 23 auf, auf der das Werkstück 28 angeordnet ist. Im Laserstrahlerzeuger 21 wird der Laserstrahl 29 erzeugt und mittels eines (nicht gezeigten) Lichtleitkabels oder (nicht gezeigten) Umlenkspiegeln vom Laserstrahlerzeuger 21 zum Laserschneidkopf 22 geführt. Der Laserstrahl 29 wird mittels einer im Laserschneidkopf 22 angeordneten Fokussieroptik auf das Werkstück 28 gerichtet. Die Laserschneidanlage 20 wird darüber hinaus mit Schneidgasen 24, beispielsweise Sauerstoff und/oder Stickstoff, versorgt. Das Schneidgas 24 wird einer Schneidgasdüse 25 des Laserschneidkopfes 22 zugeführt, aus der es zusammen mit dem Laserstrahl 29 austritt. Die Laserschneidanlage 20 umfasst ferner eine Umschaltoptik 26 (beispielsweise ein diffraktives optisches Element oder einen adaptiven Spiegel) zum Umschalten zwischen einem größeren und einem kleineren Fokusdurchmesser des Laserstrahls 29 oder eine im Laserschneidkopf 22 angeordnete, aus mehreren Linsen bestehende Zoom-Optik zur Variation von Fokuslage und Fokusdurchmesser des Laserstrahls 29, sowie eine Maschinensteuerung 27, die programmiert ist, sowohl den Laserschneidkopf 22 samt seiner Schneidgasdüse 25 entsprechend der Schneidkontur relativ zum Werkstück 28 zu verfahren als auch die Umschaltoptik 26 oder die Zoom-Optik anzusteuern. Die Umschaltoptik 26 muss nicht zwangsläufig im Laserschneidkopf 22 angeordnet sein, sondern kann sich auch im oder am Strahlerzeuger 21 vor einem Lichtleitkabel oder an anderer Stelle in der Strahlführung befinden.

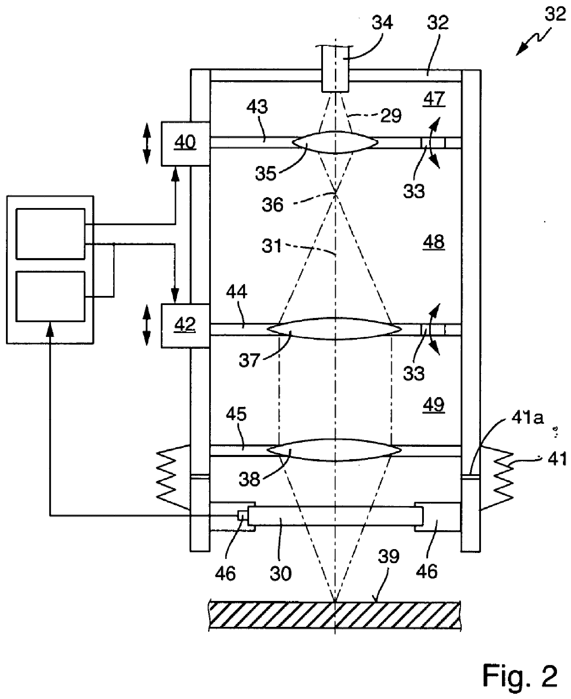

Figur 2 zeigt einen beispielhaften Aufbau eines Laserbearbeitungskopfs in Form eines Laserschneidkopfs 22, der an einer Laserschneidanlage 20 zum Einsatz kommen kann, mit einem Gehäuse 32, in das der Laserstrahl 29 über eine Transportfaser 34 eingekoppelt wird. Der Laserstrahl 29 trifft divergent auf eine erste Linse 35 mit kurzer Brennweite und wird über einen Zwischenfokus 36 auf eine zweite Linse 37 abgebildet. Der durch die zweite Linse 37 kollimierte Laserstrahl 29 wird über eine (ortsfeste) weitere, durch eine Halterung 46 gehaltene Linse 38, die als Fokussieroptik dient, auf eine Werkstückoberfläche 39 zur Lasermaterialbearbeitung fokussiert.

Zur Einstellung von Fokuslage und Fokusdurchmesser des Laserstrahls 29 sind jeweils Linsen-Halterungen 43, 44 für die erste Linse 35 bzw. die zweite Linse 37 mittels Fokuseinstelleinrichtungen 40, 42 (gesteuert durch von einer Steuerung vorgegebene Steuersignale) entlang der optischen Achse 31 des Laserstrahls 29 verschiebbar. Es versteht sich, dass die oben beschriebene Linsen-Anordnung nach dem Prinzip eines Keppler-Teleskops alternativ durch eine Galileo-Teleskop-Anordnung ersetzt werden kann.

Die Linsen-Halterungen 43, 44 zur Führung der ersten bzw. zweiten Linse 35, 37 weisen Überströmungskanäle 33 auf, die für einen Druckausgleich zwischen den Kammern 47, 48, 49 beim Bewegen der Linsen 35, 37 sorgen.

In Strahlausbreitungsrichtung der Fokussieroptik nachgeordnet, weist der Bearbeitungskopf 22 ein durch eine Halterung 46 gehaltenes Schutzglas/Druckfenster 30 auf. Ein nicht näher gezeigter Kollisionsschutz sieht dabei vor, dass eine kollisionsbedingte Trennung in dem Bereich 41a zwischen Fokussieroptik und Schutzglas/Druckfenster 30 erfolgen kann. Ein um diesen Bereich 41a an dem Gehäuse 32 der Strahlformungseinheit angebrachter Faltenbalg 41 verhindert in einem solchen Fall das Eindringen von Schmutzpartikeln, die sich im ungünstigsten Fall direkt an der Fokussieroptik absetzen könnten.

Insbesondere die Halterung 46 des Schutzglases 30, aber grundsätzlich auch die Linsen-Halterungen 43, 44, 45, können als Halteanordnungen gemäß der vorliegenden Erfindung ausgeführt sein.

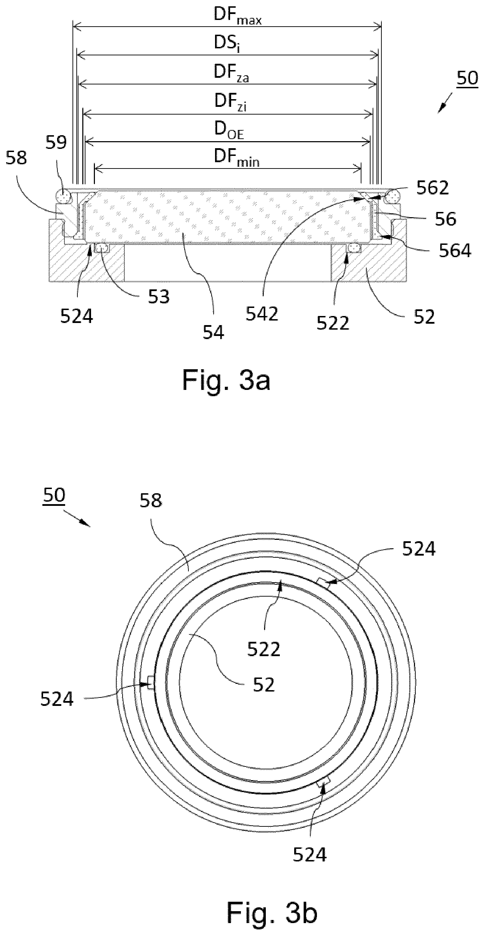

Im Zusammenhang mit den Figuren 3a und 3b werden im Folgenden Aspekte einer erfindungsgemäßen Halteanordnung näher beschrieben.

Figur 3a zeigt einen Querschnitt durch eine erfindungsgemäße Halteanordnung 50. Halteanordnung 50 umfasst ein Aufnahmeelement 52, das im Wesentlichen die Form eines Hohlzylinders aufweist, sodass es eine Strahldurchtrittsöffnung für einen Laserstrahl umgibt. Das Aufnahmeelement 52 weist eine umlaufende Nut 522 auf in welche ein Dichtungsring 53 aufgenommen ist. Radial außerhalb der Nut 522 weist das Aufnahmeelement 52 drei Erhebungen 524 auf (s. Figur 3b). Die Erhebungen 524 bilden eine Dreipunktauflage für ein optisches Element 54 in Form einer Planscheibe 54, die auf dem Aufnahmeelement 52 über der Strahldurchtrittsöffnung positioniert ist. Die Planscheibe 54 weist an ihrer oberen Außenkante eine Fase 542 auf.

Auf der umlaufenden Fase 542 ist ein Federelement 56 in Form eines Kunststoffrings 56 aus Polyetheretherketone (PEEK) angeordnet. Das Federelement 56 weist an seinem oberen Ende einen Halteabschnitt 562 auf, der eine nach radial innen geneigte Haltefläche umfasst, mit der das Federelement 56 auf der umlaufenden Fase 542 der Planplatte 54 abliegt. Unterhalb des Halteabschnitts 562 erstreckt sich das Federelement 56 mit einem zentralen Abschnitt radial außerhalb der Planplatte 54. An seinem unteren Ende weist das Federelement 56 einen umlaufenden keilförmigen Spannabschnitt 564 auf, mit einer radial nach außen geneigten Haltefläche.

Radial außerhalb des Federelements 56 ist ein ringförmiges Spannelement 58 derart positioniert, dass es mit einer entsprechend ausgebildeten umlaufenden Fase auf der Haltefläche des Federelements 56 abliegt. Das Spannelement 58 weist ein Außengewinde auf und ist auf das Aufnahmeelement 52 aufgeschraubt, welches ein entsprechend ausgebildetes Innengewinde aufweist. Oberhalb des Außengewindes weist das Spannelement 58 eine umlaufende Schulter auf, die eine Endposition des Spannelements 58 beim Anschrauben an das Aufnahmeelement 52 genau definiert. Mittels des Spannelements 58 wird das Federelement 56 über seinen keilförmigen Spannabschnitt 564 nach unten in Richtung des Aufnahmeelement 52 gedrückt und in dem Spalt zwischen der Planplatte 54 und dem Spannelement 58 elastisch verformt. Die dabei entstehende Vorspannkraft wird durch den Halteabschnitt 542 des Federelements 54 und die umlaufende Fase 522 auf die Planplatte 54 übertragen, welche gegen die Erhebungen 524 des Aufnahmeelements 52 gedrückt und fixiert wird.

Das Federelement 56 stellt einerseits über den umlaufenden Halteabschnitt 564 die Positioniergenauigkeit der Planplatte 54 in dem Aufnahmeelement 52 sicher und kann aufgrund seiner Federwirkung mechanische und thermische Spannungen, insbesondere eine Wärmeausdehnung des metallischen Aufnahmeelements und des metallischen Spannelements, ausgleichen. Durch die gegenläufigen Neigungswinkel der Haltefläche und der Spannfläche, sowie die guten mechanischen Eigenschaften (insbesondere die gute Kriechfestigkeit) von PEEK über einem großen Temperaturbereich, gleitet das Federelement 56 bei Wärmeausdehnung relativ zu der Planplatte 54 und zum Aufnahmeelement, ohne dass die Spannwirkung des Federelements 56 kritisch absinkt. So wird die Planplatte 54 über einen großen Temperaturbereich sicher in dem Aufnahmeelement 52 gehalten und positioniert.

Das Federelement 56 aus PEEK erzeugt bei Reibung an der Fase 542 der Planplatte 54 durch Wärmeausdehnung und/oder ruckartige Bewegungen des Laserschneidkopfes keine Partikel, die sich auf der Planplatte 54 absetzen könnten.

Der Dichtungsring 53 besteht vorzugsweise aus einem besonders weichen Elastomer und dient zur Abdichtung gegenüber Umgebungs- oder Schneidgasdruck. Am oberen Ende des Spannelements 58 ist ebenfalls ein Dichtungsring 59 angeordnet, der aber aus einem härteren Elastomer bestehen kann (z.B. Shore-Härte SHORE A 70).

Figur 3b zeigt eine Draufsicht auf das Aufnahmeelement 52 mit aufgeschraubtem Spannelement 58. Zu sehen sind, in dieser Perspektive, insbesondere die drei Hervorhebungen 524 des Aufnahmeelements 52 zur positionsgenauen Lagerung der Planplatte 54.

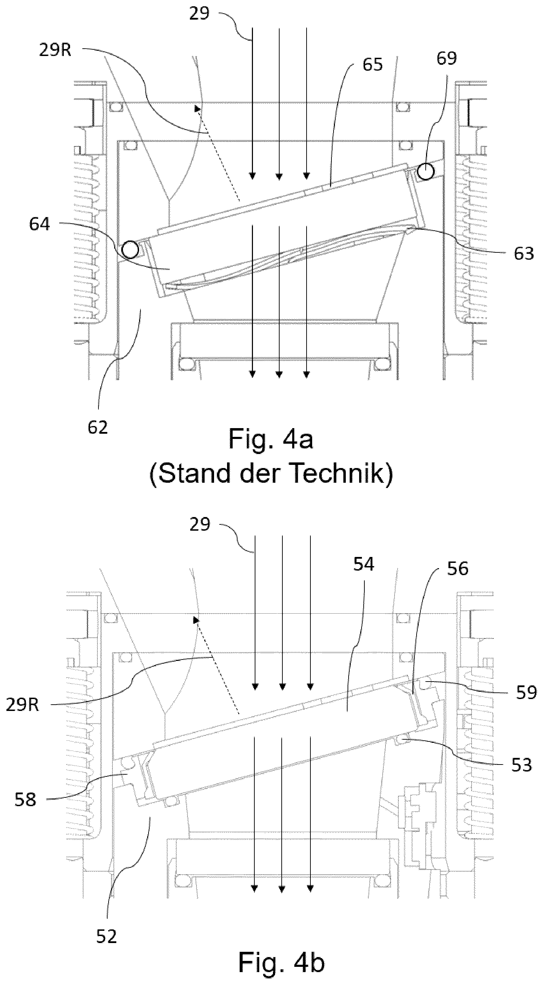

Die Figuren 4a und 4b zeigen jeweils eine Halteanordnung 50, 60 für eine Planplatte 54, 64 in einem Laserschneidkopf, wobei die Planplatte 50, 60 jeweils winklig im Strahlengang angeordnet ist. Der Laserstrahl 29 trifft also in einem Winkel auf die Oberfläche der Planplatte 50, 60, wobei reflektierte Strahlung 29R in einen Überwachungsstrahlengang abgelenkt und zu einem Analysemodul zur Überwachung des Strahlprofils des Laserstrahls 29 geleitet werden kann.

Die Darstellung gemäß Figur 4a entspricht dem Stand der Technik. Die Planplatte 64 liegt auf einer ringförmigen Wellfederscheibe 63 auf, die auf einem Aufnahmeelement 62 angeordnet ist. Das Aufnahmeelement 62 wird derart in dem Laserschneidkopf befestigt, dass die Planplatte 64 an der Oberseite gegen drei Hervorhebungen 65 gedrückt wird, die in einem oberen Gehäuseteil des Laserschneidkopfes gleichmäßig in Umfangsrichtung verteilt angeordnet sind. Ein Dichtungsring 69 dichtet die Halteanordnung 60 gegen Umgebungsdruck ab.

Die Wellfederscheibe 63 und die Hervorhebungen 65 (beide aus Stahl oder einem anderen Metall) erzeugen bei Reibung kleine Partikel, die sich an der Oberfläche der Planplatte 64 absetzen und die optischen Eigenschaften der Planplatte 64 negativ beeinflussen können (insb. Einkopplung von Strahlungsenergie durch Verunreinigungen an der Oberfläche der Planplatte 64). Die Wellfederscheibe 63 dichtet die Halteanordnung 60 zudem nicht gegen Schneidgasdruck von unten ab, wodurch weitere Schmutzpartikel aus dem unteren Schneidkopfteil in die Schneidoptik geraten können.

Diese Nachteile werden durch die erfindungsgemäße Halteanordnung 50 gemäß der Darstellung in Figur 4b behoben. Die hier dargestellte Anordnung entspricht der Anordnung gemäß Figur 3a, weshalb auf die obige Beschreibung verwiesen wird.

Die Planplatte 50 erfüllt in der Darstellung gemäß Figur 4b einerseits eine Strahlteilerfunktion (Ableitung von reflektierter Strahlung zur Überwachung des Laserstrahlprofils) und andererseits eine Schutzglasfunktion zur Abschirmung der oberhalb im Laserschneidkopf angeordneten Schneidoptik von Umgebungs- und/oder Schneidgasdruck und somit auch von möglichen Verschmutzungen.

Eine erfindungsgemäße Haltevorrichtung kann auch zum Halten anderer optischer Elemente (z.B. Linsen) verwendet werden.

### Bezugszeichenliste

- 20: Laserschneidanlage
- 21: Laserstrahlerzeuger
- 22: Laserschneidkopf
- 23: Werkstückauflage
- 24: Schneidgas
- 25: Schneidgasdüse
- 26: Umschaltoptik
- 27: Maschinensteuerung
- 28: Werkstück
- 29: Laserstrahl
- 29R: Reflektierte Laserstrahlung
- 30: Schutzglas / Druckfenster
- 31: Optische Achse
- 32: Gehäuse
- 33: Überströmungskanäle
- 34: Transportfaser
- 35: Erste Linse
- 36: Zwischenfokus
- 37: Zweite Linse
- 38: Gehaltene Linse
- 39: Werkstückoberfläche
- 40, 42: Fokuseinstelleinrichtung
- 41: Faltenbalg
- 41a: Bereich für eine Verkippung des unteren Teils des Laserschneidkopfs im Kollisionsfall
- 43, 44, 45: Linsen-Halterungen
- 46: Schutzglas-Halterung
- 47, 48, 49: Kammern
- 50: Halteanordnung für ein optisches Element eines Laserschneidkopfes
- 52: Aufnahmeelement
- 522: Nut
- 524: Erhebungen für Dreipunktauflage
- 53: Erster Dichtungsring
- 54: Optisches Element
- 542: Fase des optischen Elements
- 56: Federelement
- 562: Halteabschnitt des Federelements
- 564: Spannabschnitt des Federelements
- 58: Spannelement
- 59: Zweiter Dichtungsring
- 62: Aufnahmeelement (Stand der Technik)
- 63: Wellfederscheibe (Stand der Technik)
- 64: Planplatte (Stand der Technik)
- 65: Erhebungen Dreipunktauflage (Stand der Technik)
- 69: Dichtungsring (Stand der Technik)
- DF_{zi}: Innendurchmesser des Federelements im zentralen Bereich
- DF_{za}: Außendurchmesser des Federelements im zentralen Bereich
- DFₘᵢₙ: Kleinster (Innen-)Durchmesser des Federelements
- DFₘₐₓ: Größter (Außen-)Durchmesser des Federelements
- D_{OE}: Durchmesser des optischen Elements
- DSᵢ: Innendurchmesser des Spannelements

## Patentansprüche

1. Halteanordnung (50) für ein optisches Element (54) eines Laserschneidkopfs (22), die Halteanordnung (50) umfassend:
Ein Aufnahmeelement (52) mit einer Strahldurchtrittsöffnung für einen Laserstrahl (29);
Ein, im Wesentlichen zylinderförmiges, optisches Element (54), das an dem Aufnahmeelement (52) positionierbar ist, sodass es die Strahldurchtrittsöffnung abdeckt, wobei das optische Element (54) eine von dem Aufnahmeelement (52) entfernte erste Außenkante mit einer Fase (542) aufweist;
Ein, im Wesentlichen ringförmiges, Federelement (56) aus Kunststoff, das an einem von dem Aufnahmeelement (52) entfernten ersten Ende einen Halteabschnitt (562) mit einer radial nach innen geneigten Haltefläche und an einem dem Aufnahmeelement (52) nahen zweiten Ende einen Spannabschnitt (564) mit einer radial nach außen geneigten Spannfläche aufweist, wobei das Federelement (56) einen im Querschnitt senkrecht verlaufenden zentralen Abschnitt aufweist, der den Halteabschnitt (562) und den Spannabschnitt (564) miteinander verbindet, und wobei das Federelement (56) derart an dem optischen Element (54) positionierbar ist, dass es mit der Haltefläche an der Fase (542) des optischen Elements (54) anliegt; und
Ein, im Wesentlichen ringförmiges, Spannelement (58), das derart an dem Federelement (56) positionierbar und an dem Aufnahmeelement (52) befestigbar ist, dass das Spannelement (58) in den Spannabschnitt (564) des Federelements (56) eingreift und das Federelement (56) in Richtung des Aufnahmeelements drückt (52) und das optische Element (54) mittels des Halteabschnitts (562) des Federelements (56) gegen das Aufnahmeelement (52) gedrückt wird, wobei das Spannelement (58) an einem dem Aufnahmeelement (52) nahen Ende an seinem Innenumfang eine Fase oder einen Radius aufweist, die bzw. der zum Eingriff mit der radial nach außen geneigten Spannfläche des Federelements (56) ausgebildet ist.

2. Halteanordnung (50) nach Anspruch 1, wobei das Federelement (56) aus einem hochtemperaturbeständigen thermoplastischen Kunststoff, insbesondere aus Polyetheretherketon (PEEK), besteht.

3. Halteanordnung (50) nach einem der vorhergehenden Ansprüche, wobei die Fase (542) an der ersten Außenkante des optischen Elements (54) einen vorgebbaren Fasenwinkel aufweist und wobei die Spannfläche des Federelements (56) einen Neigungswinkel aufweist, der dem Fasenwinkel des optischen Elements (54) im Wesentlichen entspricht.

4. Halteanordnung (50) nach Anspruch 3, wobei der Fasenwinkel zwischen 20° und 70°, vorzugsweise etwa 45°, beträgt.

5. Halteanordnung (50) nach einem der vorhergehenden Ansprüche, wobei das Aufnahmeelement (52) drei Erhebungen (524) aufweist, die in gleichmäßigen Abständen zueinander auf einer Kreisbahn radial außerhalb der Strahldurchtrittsöffnung angeordnet sind und die eine Dreipunktauflage für das optische Element (54) bilden.

6. Halteanordnung (50) nach einem der vorhergehenden Ansprüche, wobei das Aufnahmeelement (52) eine ringförmige Nut (522) aufweist, die sich radial außerhalb der Strahldurchtrittsöffnung erstreckt und wobei die Halteanordnung (50) ferner umfasst:
Einen Dichtungsring (53), der in die ringförmige Nut (522) aufnehmbar ist, um gemeinsam mit dem optischen Element (54) die Strahldurchtrittsöffnung abzudichten.

7. Halteanordnung (50) nach Anspruch 6, wobei der Dichtungsring (53) aus einem Kunststoff besteht und eine Shore-Härte (SHORE A) zwischen 25 und 45, vorzugsweise von 40, aufweist

8. Laserschneidkopf (22) umfassend wenigstens eine Halteanordnung (50) nach einem der Ansprüche 1 bis 7.

9. Laserschneidkopf (22) nach Anspruch 8, ferner umfassend einen verkippbaren Abschnitt, der dazu ausgebildet ist, bei einer Kollision des Laserschneidkopfes (22) mit einem zu bearbeitenden Werkstück (28) seitlich zu verkippen, wobei die Halteanordnung (50) in dem verkippbaren Abschnitt angeordnet ist.

## Claims

1. A holding arrangement (50) for an optical element (54) of a laser cutting head (22), the holding arrangement (50) comprising:
a receiving element (52) having a beam passage opening for a laser beam (29);
a substantially cylindrical, optical element (54) which can be positioned on the receiving element (52), such that it covers the beam passage opening, the optical element (54) having a first outer edge which is remote from the receiving element (52) and has a chamfer (542);
a substantially annular, spring element (56) which is made of plastic and has, at a first end remote from the receiving element (52), a holding portion (562) having a radially inwardly inclined holding surface and, at a second end near the receiving element (52), a clamping portion (564) having a radially outwardly inclined clamping surface, the spring element (56) having a central portion which runs perpendicularly in cross section and connects the holding portion (562) and the clamping portion (564) to one another, and the spring element (56) being positionable on the optical element (54) such that it bears with the holding surface against the chamfer (542) of the optical element (54); and
a substantially annular clamping element (58) which can be positioned on the spring element (56) and can be fastened to the receiving element (52) such that the clamping element (58) engages in the clamping portion (564) of the spring element (56) and presses the spring element (56) in the direction of the receiving element (52) and the optical element (54) is pressed against the receiving element (52) by means of the holding portion (562) of the spring element (56), the clamping element (58) having a chamfer or radius on its inner circumference at an end near the receiving element (52), which chamfer or radius is designed to engage with the radially outwardly inclined clamping surface of the spring element (56).

2. The holding arrangement (50) according to claim 1, wherein the spring element (56) consists of a high-temperature-resistant thermoplastic material, in particular polyetheretherketone (PEEK).

3. The holding arrangement (50) according to any one of the preceding claims, wherein the chamfer (542) has, on the first outer edge of the optical element (54), a predefinable chamfer angle and wherein the clamping surface of the spring element (56) has an inclination angle which substantially corresponds to the chamfer angle of the optical element (54).

4. The holding arrangement (50) according to claim 3, wherein the chamfer angle is between 20° and 70°, preferably about 45°.

5. The holding arrangement (50) according to any one of the preceding claims, wherein the receiving element (52) has three projections (524) which are arranged at equal distances from one another on a circular path radially outside the beam passage opening and which form a three-point support for the optical element (54).

6. The holding arrangement (50) according to any one of the preceding claims, wherein the receiving element (52) has an annular groove (522) extending radially outside the beam passage opening and wherein the holding arrangement (50) further comprises:
a sealing ring (53) which can be received in the annular groove (522) in order to seal the beam passage opening together with the optical element (54).

7. The holding arrangement (50) according to claim 6, wherein the sealing ring (53) consists of a plastic and has a Shore hardness (SHORE A) between 25 and 45, preferably 40.

8. A laser cutting head (22) comprising at least one holding arrangement (50) according to any one of claims 1 to 7.

9. The laser cutting head (22) according to claim 8, further comprising a tiltable portion which is designed to tilt laterally in the event of a collision of the laser cutting head (22) with a workpiece (28) to be processed, wherein the holding arrangement (50) is arranged in the tiltable portion.

## Revendications

1. Dispositif de retenue (50) pour un élément optique (54) d'une tête de découpe laser (22), le dispositif de retenue (50) comprenant :
un élément de réception (52) comportant une ouverture de passage de faisceau pour un faisceau laser (29) ;
un élément optique (54) sensiblement de forme cylindrique qui peut être positionné sur l'élément de réception (52) de manière à couvrir l'ouverture de passage de faisceau, l'élément optique (54) présentant un premier bord extérieur comportant un chanfrein (542) situé à l'écart de l'élément de réception (52) ;
un élément élastique (56) sensiblement de forme annulaire en matière plastique, qui présente, à une première extrémité éloignée de l'élément de réception (52), une section de retenue (562) comportant une surface de retenue inclinée radialement vers l'intérieur et, à une seconde extrémité proche de l'élément de réception (52), une section de serrage (564) comportant une surface de serrage inclinée radialement vers l'extérieur, l'élément élastique (56) présentant une section centrale s'étendant verticalement en section transversale qui relie la section de retenue (562) et la section de serrage (564) l'une à l'autre ; et l'élément élastique (56) pouvant être positionné sur l'élément optique (54) de façon à reposer avec la surface de retenue contre le chanfrein (542) de l'élément optique (54) ; et
un élément de serrage (58), sensiblement de forme annulaire, qui peut être positionné sur l'élément élastique (56) et fixé à l'élément de réception (52) de telle sorte que l'élément de serrage (58) vienne en prise dans la section de serrage (564) de l'élément élastique (56) et presse l'élément élastique (56) vers l'élément de réception (52), et l'élément optique (54) est pressé contre l'élément de réception (52) au moyen de la section de retenue (562) de l'élément élastique (56), l'élément de serrage (58) présentant sur sa circonférence intérieure à une extrémité proche de l'élément de réception (52) un chanfrein ou un rayon, conçu pour venir en prise avec la surface de serrage inclinée radialement vers l'extérieur de l'élément élastique (56).

2. Dispositif de retenue (50) selon la revendication 1, dans lequel l'élément élastique (56) est constitué d'une matière thermoplastique résistante à haute température, en particulier de polyétheréthercétone (PEEK).

3. Dispositif de retenue (50) selon l'une quelconque des revendications précédentes, dans lequel le chanfrein (542) sur le premier bord extérieur de l'élément optique (54) présente un angle de chanfrein prédéfini et dans lequel la surface de serrage de l'élément élastique (56) présente un angle d'inclinaison qui correspond sensiblement à l'angle de chanfrein de l'élément optique (54).

4. Dispositif de retenue (50) selon la revendication 3, dans lequel l'angle de chanfrein est compris entre 20° et 70°, et vaut de préférence environ 45°.

5. Dispositif de retenue (50) selon l'une quelconque des revendications précédentes, dans lequel l'élément de réception (52) présente trois protubérances (524) qui sont disposées à intervalles réguliers les unes des autres sur un trajet circulaire radialement à l'extérieur de l'ouverture de passage de faisceau et qui forment un support à trois points pour l'élément optique (54).

6. Dispositif de retenue (50) selon l'une quelconque des revendications précédentes, dans lequel l'élément de réception (52) présente une rainure de forme annulaire (522) qui s'étend radialement à l'extérieur de l'ouverture de passage de faisceau et le dispositif de retenue (50) comprenant en outre :
une bague d'étanchéité (53) qui peut être reçue dans la rainure de forme annulaire (522) pour sceller l'ouverture de passage de faisceau conjointement avec l'élément optique (54).

7. Dispositif de retenue (50) selon la revendication 6, dans lequel la bague d'étanchéité (53) est constituée d'une matière plastique et présente une dureté Shore (SHORE A) comprise entre 25 et 45, de préférence de 40.

8. Tête de découpe laser (22) comprenant au moins un dispositif de retenue (50) selon l'une des revendications 1 à 7.

9. Tête de découpe laser (22) selon la revendication 8, comprenant en outre une section basculante qui est conçue pour basculer latéralement lors d'une collision de la tête de découpe laser (22) avec une pièce à usiner (28), dans laquelle le dispositif de retenue (50) est disposé dans la section basculante.
